# EUROPEAN PATENT SPECIFICATION

(11) **EP 4 092 360 B1**
(45) Date of publication and mention of the grant of the patent: **10.07.2024**
(21) Application number: 21751022.1
(22) Date of filing: 22.01.2021
(51) Int. Cl.: F25B 41/20, F25B 49/02, F24F 11/36, F24F 11/526, F24F 11/77, F24F 11/89

(54) **AIR-CONDITIONING SYSTEM**
KLIMATISIERUNGSSYSTEM
SYSTÈME DE CLIMATISATION

(30) Priority: 05.02.2020 JP 2020017925
(43) Date of publication of application: 23.11.2022
(73) Proprietor: Daikin Industries, Ltd., Osaka-shi, Osaka 530-0001 (JP)
(72) Inventor: SUZUKI Shuuichi, Osaka-shi, Osaka 530-8323 (JP); FUKUYAMA Yuuta, Osaka-shi, Osaka 530-8323 (JP)
(74) Representative: Hoffmann Eitle
(86) International application number: PCT/JP2021/002309
(87) International publication number: WO 2021/157395

(56) References cited:
- EP-A1- 3 447 406
- WO-A1-2016/174767
- WO-A1-2020/021661
- JP-A- 2000 035 267
- JP-A- 2013 019 620
- JP-A- 2013 019 621
- JP-A- 2013 019 621
- JP-A- 2017 194 187
- JP-A- H07 159 010
- JP-U- S6 277 769
- US-A1- 2021 293 430

## Description

### TECHNICAL FIELD

The present invention relates to an air-conditioning system.

### BACKGROUND ART

JP 2016-211794 A discloses an air-conditioning ventilation system including an air conditioner and a ventilator. In this air-conditioning ventilation system, an air conditioner controller that controls components of the air conditioner instructs a ventilator controller that controls components of the ventilator to operate the ventilator if leakage of a refrigerant is detected when the air conditioner and the ventilator are connected for communication. EP 3 447 406 A1 relates to a fan drive circuit for a heat pump device, wherein the heat pump device blows air heat exchanged by a heat exchanger using a mildly-flammable or flammable refrigerant having a specific gravity greater than that of air from a blowout port using a fan. A forced operation circuit of the fan drive is configured to operate the fan in the event that it is undetectable that a protection device for preventing a leaked refrigerant from the heat pump device from reaching a combustible density is connected to the heat pump device.

### SUMMARY OF THE INVENTION

### TECHNICAL PROBLEM

In the air-conditioning system as disclosed in JP 2016-211794 A, the air conditioner controller is required to control not only the components of the air conditioner, but also the ventilator. Thus, it is difficult to reduce the processing load on the air conditioner controller.

An object of the present invention is to provide an air-conditioning system that can reduce the processing load on a controller of an air conditioner.

### SOLUTION TO THE PROBLEM

A first aspect of the present invention is directed to an air conditioning-system, as defined in claim 1.

In the first aspect, the countermeasure device (60, 65) is able to operate when the controller (33) of the air conditioner (10) closes the first relay (811, 812). This can make the processing load on the controller (33) of the air conditioner (10) smaller than the processing load on the controller (33) of the air conditioner (10) that directly controls the countermeasure device (60, 65).

A second aspect of the present invention is an embodiment of the first aspect. In the second aspect, the refrigerant circuit (10a) has an indoor circuit (30a) including an indoor heat exchanger (31) provided in the indoor space (A), a first refrigerant flow path (13) connected to a gas end portion of the indoor circuit (30a), and a second refrigerant flow path (17) connected to a liquid end portion of the indoor circuit (30a). The countermeasure device (60, 65) includes a cut-off valve (V) provided in at least one of the first refrigerant flow path (13) or the second refrigerant flow path (17), and closes the cut-off valve (V) when the first relay (811, 812) is closed.

In the second aspect, the refrigerant can be kept from leaking from the refrigerant circuit (10a) to the indoor space (A) when the cut-off valve (V) is closed. This can keep the concentration of the refrigerant in the indoor space (A) from increasing due to the leakage of the refrigerant to the indoor space (A).

A third aspect of the present invention is an embodiment of the first or second aspect. In the third aspect, the countermeasure device (60, 65) includes a ventilation fan (66) that ventilates the indoor space (A), and drives the ventilation fan (66) when the first relay (811, 812) is closed.

In the third aspect, the refrigerant leaked to the indoor space (A) can be discharged out of the indoor space (A) when the ventilation fan (66) is driven.

In the third aspect, the refrigerant leaked to the indoor space (A) can be discharged out of the indoor space (A) when the ventilation fan (66) is driven. This can keep the concentration of the refrigerant in the indoor space (A) from increasing due to the leakage of the refrigerant to the indoor space (A).

A fourth aspect of the present invention is an embodiment of any one of the first to third aspects. In the fourth aspect, the first relay (811, 812) is provided in the air conditioner (10).

In the fourth aspect, the first relay (811, 812) is provided inside the air conditioner (10). This can bring the first relay (811, 812) closer to the controller (33) than the first relay (811, 812) provided outside the air conditioner (10). This can reduce misconnection between the first relay (811, 812) and the controller (33).

A fifth aspect of the present invention is an embodiment of any one of the first to third aspects. In the fifth aspect, the first relay (811, 812) is provided in the countermeasure device (60, 65).

In the fifth aspect, the first relay (811, 812) is provided inside the countermeasure device (60, 65). This can bring the first relay (811, 812) closer to the controller of the countermeasure device (60, 65) than the first relay (811, 812) provided outside the countermeasure device (60, 65). This can reduce misconnection between the first relay (811, 812) and the controller of the countermeasure device (60, 65).

A sixth aspect of the present invention is an embodiment of any one of the first to fifth aspects. In the sixth aspect, the air-conditioning system further includes: an alarm device (55) configured to raise an alarm; and a second relay (82) connected to the controller (33) and the alarm device (55). The controller (33) closes the first relay (811, 812) and the second relay (82) when the concentration of the refrigerant detected by the detector (70) exceeds the allowable concentration. The alarm device (55) raises the alarm when the second relay (82) is closed.

In the sixth aspect, the alarm device (55) is able to operate when the controller (33) of the air conditioner (10) closes the second relay (82). This can make the processing load on the controller (33) of the air conditioner (10) smaller than the processing load on the controller (33) of the air conditioner (10) that directly controls the alarm device (55).

A seventh aspect of the present invention is an embodiment of any one of the first to sixth aspects. In the seventh aspect, the air conditioner (10) includes an outdoor unit (20) and an indoor unit (30), and the controller (33) is provided in the indoor unit (30).

In the seventh aspect, the controller (33) connected to the countermeasure device (60, 65) via the first relay (811, 812) is provided in the indoor unit (30). This can bring the controller (33) closer to the first relay (811, 812) and the countermeasure device (60, 65) than the controller (33) provided in the outdoor unit (20). This can reduce misconnection between the controller (33), the first relay (811, 812), and the countermeasure device (60, 65).

An eighth aspect of the present invention is an embodiment of any one of the first to sixth aspects. In the eighth aspect, the air conditioner (10) includes an outdoor unit (20) and a plurality of indoor units (30) configured to condition air in a plurality of indoor spaces (A). The outdoor unit (20) includes an outdoor controller (27). The controller (33) is provided in each of the plurality of indoor units (30). The countermeasure device (60, 65) is provided in correspondence with at least one of the plurality of indoor spaces (A). The detector (70) is provided in each of the plurality of indoor spaces (A). The controller (33) transmits a first signal to the outdoor controller (27) when the concentration of the refrigerant detected by the detector (70) provided in the indoor space (A) where the indoor controller (33) is located exceeds the allowable concentration. The outdoor controller (27) transmits a second signal to the controller (33) connected to the countermeasure device (60, 65) via the first relay (811, 812) when receiving the first signal. The controller (33) closes the first relay (811, 812) when receiving the second signal.

In the eighth aspect, the countermeasure device (60, 65) provided in the indoor spaces (A) is able to operate when the concentration of the refrigerant detected by the detector (70) in any of the plurality of indoor spaces (A) exceeds the allowable concentration. This can handle the leakage of the refrigerant to the indoor spaces (A) even in a case of misconnection between the controller (33) and the countermeasure device (60, 65) in the air-conditioning system (1).

A ninth aspect of the present invention is an embodiment of the eighth aspect. In the ninth aspect, the controller (33) closes the first relay (811, 812) and transmits the first signal to the outdoor controller (27) when the concentration of the refrigerant detected by the detector (70) provided in the indoor space (A) where the indoor controller (33) is located exceeds the allowable concentration and the countermeasure device (60, 65) is connected to the controller (33) via the first relay (811, 812), and transmits the first signal to the outdoor controller (27) when the concentration of the refrigerant detected by the detector (70) provided in the indoor space (A) where the indoor controller (33) is located exceeds the allowable concentration and the countermeasure device (60, 65) is not connected to the controller (33) via the first relay (811, 812).

In the ninth aspect, the countermeasure device (60, 65) connected to the controller (33) via the first relay (811, 812) is able to operate when the concentration of the refrigerant detected by the detector (70) in any of the plurality of indoor spaces (A) exceeds the allowable concentration. This can handle the leakage of the refrigerant to the indoor spaces (A).

### BRIEF DESCRIPTION OF THE DRAWINGS

FIG. 1 is a piping system diagram illustrating a configuration of an air-conditioning system according to an embodiment.
FIG. 2 is a block diagram illustrating the configuration of the air-conditioning system according to the embodiment.
FIG. 3 is a flowchart for explaining how an indoor controller operates at the leakage of a refrigerant in the air-conditioning system according to the embodiment.
FIG. 4 is a flowchart for explaining how a valve relay and a valve controller operate at the leakage of a refrigerant in the air-conditioning system according to the embodiment.
FIG. 5 is a flowchart for explaining how an alarm relay and an alarm controller operate at the leakage of a refrigerant in the air-conditioning system according to the embodiment.
FIG. 6 is a flowchart for explaining how an outdoor controller operates at the leakage of a refrigerant in the air-conditioning system according to the embodiment.
FIG. 7 is a flowchart for explaining how an indoor controller operates at the leakage of a refrigerant in the air-conditioning system according to the embodiment.
FIG. 8 is a piping system diagram illustrating a configuration of an air-conditioning system according to a first variation of the embodiment.
FIG. 9 is a block diagram illustrating the configuration of the air-conditioning system according to the first variation of the embodiment.
FIG. 10 is a flowchart for explaining how an indoor controller operates at the leakage of a refrigerant in the air-conditioning system according to the first variation of the embodiment.
FIG. 11 is a flowchart for explaining how a ventilation relay and a ventilation controller operate at the leakage of a refrigerant in the air-conditioning system according to the first variation of the embodiment.
FIG. 12 is a flowchart for explaining how an indoor controller operates at the leakage of a refrigerant in an air-conditioning system according to a second variation of the embodiment.
FIG. 13 is a table showing refrigerants used in a refrigerant circuit of an air conditioner.

### DESCRIPTION OF EMBODIMENTS

Embodiments will be described in detail below with reference to the drawings. Note that the same reference characters denote the same or equivalent components in the drawings, and the description thereof will not be repeated.

### (Air-Conditioning System)

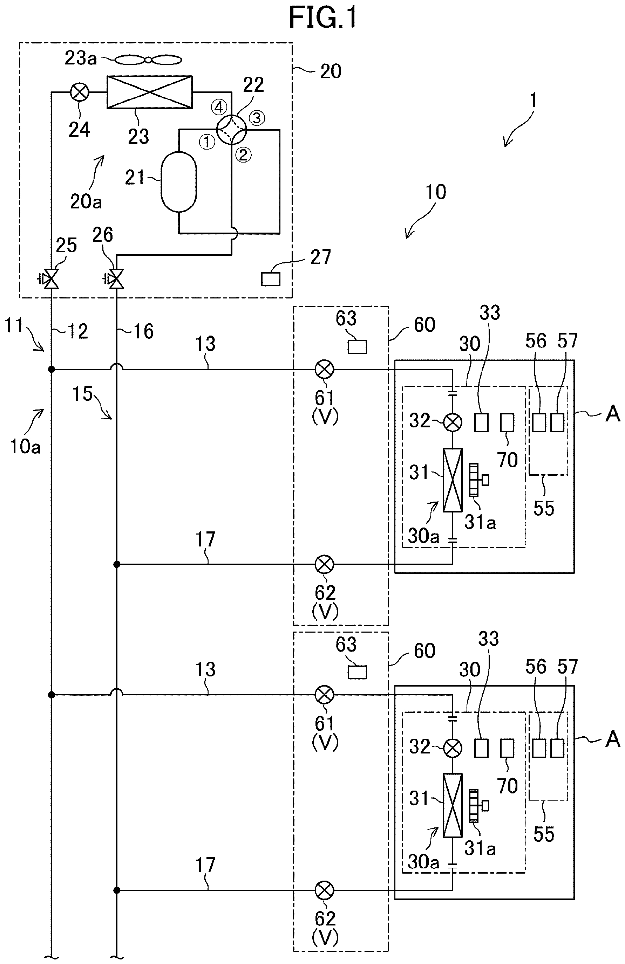

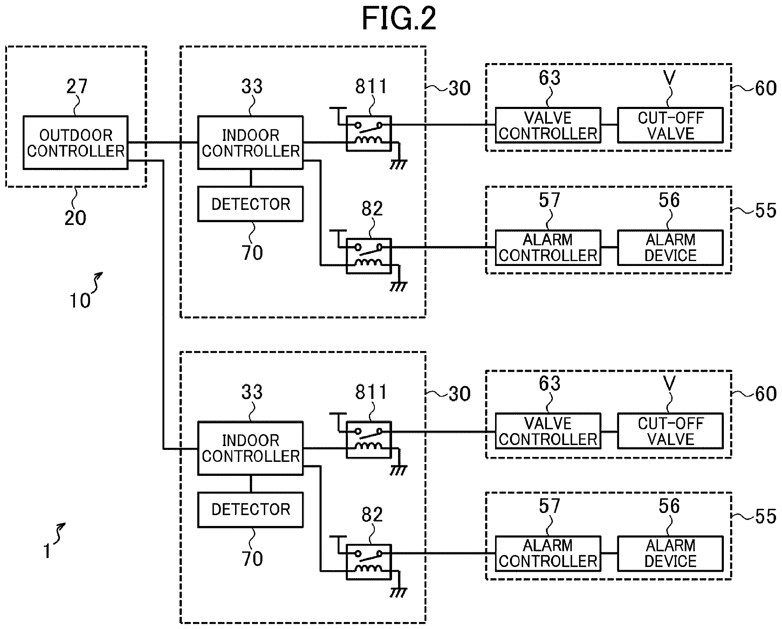

FIGS. 1 and 2 illustrate a configuration of an air-conditioning system (1) according to an embodiment. The air-conditioning system (1) includes an air conditioner (10), a plurality of cut-off units (60), a plurality of alarm devices (55), a plurality of detectors (70), a plurality of valve relays (811), and a plurality of alarm relays (82). First relays (811, 812) are provided in a one-to-one correspondence with the plurality of cut-off units (60). Second relays (82) are provided in a one-to-one correspondence with the plurality of alarm devices (55). The valve relays (811) are an example of the first relays. The alarm relays (82) are an example of the second relays.

### [Air Conditioner]

The air conditioner (10) conditions the air in a plurality of indoor spaces (A). In this example, the air conditioner (10) of this example is configured as a multi-split air conditioner including an outdoor unit (20) and a plurality of indoor units (30). The air conditioner (10) switches between cooling and heating of the indoor spaces (A). The number of indoor units (30) may be two or more. The indoor units (30) are provided in a one to-one correspondence with the indoor spaces (A), and condition the air in the indoor spaces (A). The indoor units (30) have the same configuration.

The outdoor unit (20) is placed outside. The indoor units (30) are placed inside. In the air conditioner (10), the outdoor unit (20) and the indoor units (30) are connected via a liquid connection pipe (11) and a gas connection pipe (15).

The air conditioner (10) includes a refrigerant circuit (10a) in which a refrigerant circulates to perform a vapor compression refrigeration cycle. The refrigerant circuit (10a) includes an outdoor circuit (20a) provided in the outdoor unit (20) and a plurality of indoor circuits (30a) each provided in the indoor units (30). The outdoor circuit (20a) has a liquid stop valve (25) and a gas stop valve (26). The indoor circuits (30a) in the refrigerant circuit (10a) are connected in parallel with each other. The outdoor circuit (20a) and the indoor circuits (30a) are connected via the liquid connection pipe (11) and the gas connection pipe (15).

The liquid connection pipe (11) includes a main liquid pipe (12) and a plurality of liquid branch pipes (13). One end of the main liquid pipe (12) of the liquid connection pipe (11) is connected to the liquid stop valve (25) of the outdoor circuit (20a). One end of each of the liquid branch pipes (13) is connected to the main liquid pipe (12). The other end of each of the liquid branch pipes (13) is connected to a liquid end (liquid-side joint) of an associated one of the indoor circuits (30a). The liquid branch pipes (13) are an example of a first refrigerant flow path connected to the liquid end portion of the indoor circuit (30a).

The gas connection pipe (15) includes a main gas pipe (16) and a plurality of gas branch pipes (17). One end of the main gas pipe (16) of the gas connection pipe (15) is connected to the gas stop valve (26) of the outdoor circuit (20a). One end of each of the gas branch pipes (17) is connected to the main gas pipe (16). The other end of each of the gas branch pipes (17) is connected to a gas end (a gas-side joint) of an associated one of the indoor circuits (30a). The gas branch pipes (17) are an example of a second refrigerant flow path connected to the gas end portion of the indoor circuit (30a).

### [Outdoor Unit]

The outdoor unit (20) includes a casing (not shown) that houses the outdoor circuit (20a). The outdoor circuit (20a) has a compressor (21), an outdoor heat exchanger (22), a four-way switching valve (23), an outdoor expansion valve (24), the gas stop valve (26), and the liquid stop valve (25).

The compressor (21) sucks and compresses a refrigerant and discharges the compressed refrigerant. The outdoor heat exchanger (22) exchanges heat between the refrigerant and outdoor air. An outdoor fan (22a) is provided near the outdoor heat exchanger (22). The outdoor fan (22a) transfers the outdoor air passing through the outdoor heat exchanger (22).

The four-way switching valve (23) switches between a first state indicated by solid lines in FIG. 1 and a second state indicated by broken lines in FIG. 1. The four-way switching valve (23) in the first state makes a discharge side of the compressor (21) and a gas end of the outdoor heat exchanger (22) communicate with each other, and makes a suction side of the compressor (21) and the gas stop valve (26) communicate with each other. The four-way switching valve (23) in the second state makes the discharge side of the compressor (21) and the gas stop valve (26) communicate with each other, and makes the suction side of the compressor (21) and the gas end of the outdoor heat exchanger (22) communicate with each other.

The outdoor expansion valve (24) is connected between the outdoor heat exchanger (22) and the liquid stop valve (25) in the outdoor circuit (20a). The outdoor expansion valve (24) is configured as an electronic expansion valve having an adjustable opening degree.

The outdoor unit (20) is provided with an outdoor controller (27). The outdoor controller (27) controls components of the outdoor unit (20). Specifically, the outdoor controller (27) controls components, such as the compressor (21), the outdoor expansion valve (24), and the outdoor fan (22a). For example, the outdoor controller (27) includes a processor mounted on a control board, and a memory that stores programs (software) and information for operating the processor. Details of the operation of the outdoor controller (27) will be described later.

### [Indoor Unit]

Each indoor unit (30) is a ceiling-mounted indoor unit. This ceiling-mounted type includes a ceiling embedded type and a ceiling-suspended type. The indoor unit (30) includes a casing (not shown) that houses the indoor circuit (30a). The indoor circuit (30a) includes an indoor heat exchanger (31) and an indoor expansion valve (32). The indoor heat exchanger (31) exchanges heat between the refrigerant and indoor air. An indoor fan (31a) is provided near the indoor heat exchanger (31). The indoor fan (31a) transfers the indoor air passing through the indoor heat exchanger (31).

The indoor expansion valve (32) is connected between the liquid-side joint and the indoor heat exchanger (31) in the indoor circuit (30a). The indoor expansion valve (32) is configured as an electronic expansion valve having an adjustable opening degree.

The indoor units (30) are each provided with an indoor controller (33). The indoor controller (33) controls components of the indoor unit (30). Specifically, the indoor controller (33) controls components, such as the indoor expansion valve (32) and the indoor fan (31a). The indoor controller (33) is connected to the outdoor controller (27) via a communication line, and is able to communicate with the outdoor controller (27). For example, the indoor controller (33) includes a processor mounted on a control board, and a memory that stores programs (software) and information for operating the processor. Details of the operation of the indoor controller (33) will be described later. The indoor controller (33) is an example of a controller of the air conditioner (10).

### [Cut-Off Unit]

The cut-off units (60) are in a one-to-one correspondence with the indoor spaces (A). The cut-off units (60) have the same configuration. Each cut-off unit (60) has a cut-off valve (V). The cut-off valve (V) is provided for at least one of the liquid branch pipe (13) or the gas branch pipe (17). The cut-off unit (60) closes the cut-off valve (V) when the valve relay (811) corresponding to the cut-off unit (60) is closed. For example, the cut-off valve (V) of the cut-off unit (60) is provided in a ceiling space adjacent to the indoor space (A).

In this example, the cut-off unit (60) includes a first cut-off valve (61), a second cut-off valve (62), and a valve controller (63).

The first cut-off valve (61) is the cut-off valve (V) provided for the liquid branch pipe (13). The second cut-off valve (62) is the cut-off valve (V) provided for the gas branch pipe (17). For example, each cut-off valve (V) is configured as a motor-operated valve having an adjustable opening degree.

The valve controller (63) controls the cut-off valves (V). Specifically, the valve controller (63) has a dedicated program for controlling the cut-off valves (V). The valve controller (63) executes the dedicated program to control the opening degree of each cut-off valve (V). For example, the valve controller (63) includes a processor mounted on a control board, and a memory that stores programs and information for operating the processor.

The cut-off unit (60) is an example of a countermeasure device provided against leakage of the refrigerant to the indoor space (A). Two or more countermeasure devices are in a one to-one correspondence with the indoor spaces (A). Each countermeasure device operates when the first relay corresponding to the countermeasure device is closed.

### [Alarm Device]

The alarm devices (55) are in a one to-one correspondence with the indoor spaces (A). The alarm devices (55) have the same configuration. Each alarm device (55) raises an alarm when the alarm relay (82) corresponding to the alarm device (55) is closed.

In this example, the alarm device (55) is installed in a remote controller (not shown) of the indoor unit (30). The alarm device (55) includes an alarm (56) and an alarm controller (57).

The alarm (56) raises an alarm by sound and/or light. For example, the alarm (56) may be a sound output unit that emits an alarm sound, or a light emitting unit that emits alarm light. The alarm controller (57) controls the alarm (56). Specifically, the alarm controller (57) has a dedicated program for controlling the alarm (56). The alarm controller (57) executes the dedicated program to activate the alarm (56). For example, the alarm controller (57) includes a processor mounted on a control board, and a memory that stores programs and information for operating the processor.

### [Detector]

The detectors (70) are in a one to-one correspondence with the indoor spaces (A). The detectors (70) have the same configuration. Each detector (70) detects the concentration of the refrigerant in the indoor space (A) in which the detector (70) is placed.

In this example, the detector (70) includes a measurement unit. The measurement unit measures the concentration of the refrigerant in the indoor space (A). For example, the measurement unit is comprised of a refrigerant concentration sensor that outputs a voltage having a voltage value corresponding to the concentration of the refrigerant.

In this example, the detector (70) is connected to the indoor controller (33) corresponding to the detector (70) via a signal line. The output of the detector (70) is transmitted to the indoor controller (33). In this example, the detector (70) is provided in the indoor unit (30). The detector (70) may be provided outside the indoor unit (30).

### [Valve Relay]

The valve relays (811) have the same configuration. Each valve relay (811) is connected to the valve controller (63) of the cut-off unit (60) and the indoor controller (33), both corresponding to the valve relay (811). The valve relay (811) is switchable between an open state and a closed state. In this example, the valve relay (811) transmits a first output signal when closed.

The valve relay (811) is provided in the air conditioner (10). In this example, the valve relay (811) is provided in the indoor unit (30) including the indoor controller (33) corresponding to the valve relay (811). For example, the valve relay (811) may be provided on the control board of the indoor controller (33). Examples of the valve relay (811) include various relays generally used as a contact relay or a non-contact relay.

### [Alarm Relay]

The alarm relays (82) have the same configuration. Each alarm relay (82) is connected to the alarm controller (57) of the alarm device (55) and the indoor controller (33), both corresponding to the alarm relay (82). The alarm relay (82) is switchable between an open state and a closed state. In this example, the alarm relay (82) transmits a second output signal when closed.

The alarm relay (82) is provided in the air conditioner (10). In this example, the alarm relay (82) is provided in the indoor unit (30) including the indoor controller (33) corresponding to the alarm relay (82). For example, the alarm relay (82) may be provided on the control board of the indoor controller (33). Examples of the alarm relay (82) include various relays generally used as a contact relay or a non-contact relay.

### [Indoor Controller and Outdoor Controller]

Each of the indoor controllers (33) closes the valve relay (811) and the alarm relay (82) that correspond to the indoor controller (33) when the concentration of the refrigerant detected by the detector (70) corresponding to the indoor controller (33) exceeds a predetermined allowable concentration.

Each of the indoor controllers (33) closes the valve relay (811) and the alarm relay (82) that correspond to the indoor controller (33) and transmits a first signal to the outdoor controller (27) when the concentration of the refrigerant detected by the detector (70) corresponding to the indoor controller (33) exceeds the allowable concentration. When receiving the first signal transmitted from any of the indoor controllers (33), the outdoor controller (27) transmits a second signal to each of the indoor controllers (33). When receiving the second signal transmitted from the outdoor controller (27), each of the indoor controllers (33) closes the valve relay (811) corresponding to the indoor controller (33).

### [Normal Operation of Air-Conditioning System]

A normal operation of the air-conditioning system (1) of the embodiment will be described below. The normal operation is performed when the concentration of the refrigerant in the indoor space (A) detected by the detector (70) falls below the allowable concentration. The air-conditioning system (1) switches a cooling operation and a heating operation. During the normal operation, the first cut-off valve (61) and the second cut-off valve (62) are kept open.

### <Cooling Operation>

In the cooling operation, the four-way switching valve (23) is brought into the first state, and the outdoor expansion valve (24) is open. The opening degree of the indoor expansion valve (32) is controlled based on the degree of superheat of the indoor heat exchanger (31) corresponding to the indoor expansion valve (32). The outdoor fan (22a) and the indoor fan (31a) are activated. In the cooling operation, a cooling cycle is performed in which the refrigerant condenses in the outdoor heat exchanger (22) and the refrigerant evaporates in the indoor heat exchanger (31).

The refrigerant discharged from the compressor (21) dissipates heat in the outdoor heat exchanger (22) to condense, and passes through the outdoor expansion valve (24). This refrigerant flows from the main liquid pipe (12) into the liquid branch pipes (13) and goes into each of the indoor circuits (30a) through the first cut-off valves (61). In each indoor circuit (30a), the refrigerant is decompressed by the indoor expansion valve (32), and then absorbs heat in the indoor heat exchanger (31) to evaporate. The air is cooled by the refrigerant in the indoor heat exchanger (31). The cooled air is supplied to the indoor space (A). The refrigerant flowed out of each indoor heat exchanger (31) flows through the gas branch pipe (17) and passes through the second cut-off valve (62). This refrigerant flows through the main gas pipe (16) and is sucked into the compressor (21).

### <Heating Operation>

During the heating operation, the four-way switching valve (23) is in the second state. The opening degree of the outdoor expansion valve (24) is controlled based on the degree of superheat of the refrigerant flowing out of the outdoor heat exchanger (22). The opening degree of the indoor expansion valve (32) is controlled based on the degree of subcooling of the refrigerant flowing out of the indoor heat exchanger (31) corresponding to the indoor expansion valve (32). The outdoor fan (22a) and the indoor fan (31a) are activated. In the heating operation, a heating cycle is performed in which the refrigerant condenses in the indoor heat exchanger (31) and the refrigerant evaporates in the indoor heat exchanger (31).

The refrigerant discharged from the compressor (21) flows from the main gas pipe (16) into the gas branch pipes (17) and goes into each of the indoor circuits (30a) through the second cut-off valves (62). In each indoor circuit (30a), the refrigerant dissipates heat in the indoor heat exchanger (31) to condense. The air is heated by the refrigerant in the indoor heat exchanger (31). The heated air is supplied to the indoor space (A). The refrigerant flowed out of each indoor heat exchanger (31) flows through the liquid branch pipe (13) and passes through the first cut-off valve (61). This refrigerant flows through the main liquid pipe (12) and is decompressed by the outdoor expansion valve (24). The decompressed refrigerant flows through the outdoor heat exchanger (22). In the outdoor heat exchanger (22), the refrigerant absorbs heat from the outdoor air to evaporate. The refrigerant flowed out of the outdoor heat exchanger (22) is sucked into the compressor (21).

### [Operation of Air-Conditioning System at Leakage of Refrigerant]

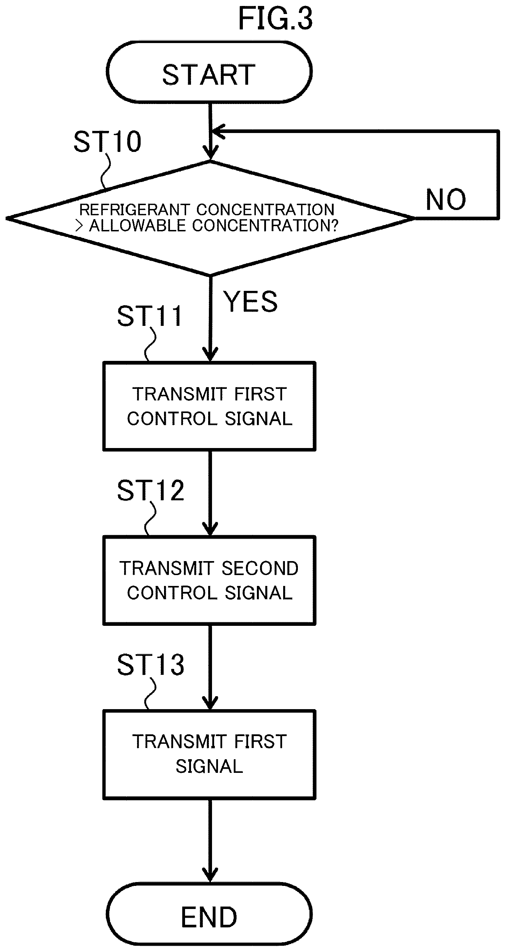

The operation of the air-conditioning system (1) of the embodiment at the leakage of the refrigerant will be described below with reference to FIGS. 3 to 7.

In the following description, the indoor controller (33) of the indoor unit (30) provided in the indoor space (A) where the refrigerant leaks will be referred to as an "indoor controller (33A)." The detector (70), the valve relay (811), the cut-off unit (60), the valve controller (63), the cut-off valve (V), the alarm relay (82), the alarm device (55), the alarm (56), and the alarm controller (57) corresponding to the indoor controller (33A) will be referred to as a "detector (70A)," a "valve relay (811A)," a "cut-off unit (60A)," a "valve controller (63A)," a "cut-off valve (VA)," an "alarm relay (82A)," an "alarm device (55A)," an "alarm (56A)", and an "alarm controller (57A)."

The indoor controller (33) of the indoor unit (30) provided in the indoor space (A) where no refrigerant leaks will be referred to as an "indoor controller (33B)." The valve relay (811), the cut-off unit (60), the valve controller (63), the cut-off valve (V), the alarm relay (82), the alarm device (55), the alarm (56), and the alarm controller (57) corresponding to the indoor controller (33B) will be referred to as a "valve relay (811B)," a "cut-off unit (60B)," a "valve controller (63B)," an "alarm relay (82B)," an "alarm device (55B)," an alarm (56B)," and an "alarm controller (57B)."

### [Operation of Indoor Controller (33A)]

First, the operation of the indoor control unit (33A) will be described with reference to FIG. 3.

### <Step (ST10)>

The indoor controller (33A) determines whether the concentration of the refrigerant detected by the detector (70A) exceeds a predetermined allowable concentration. If the concentration of the refrigerant detected by the detector (70A) exceeds the allowable concentration, the indoor controller (33A) performs the processes of Steps (ST11 to ST13).

### <Step (ST11)>

The indoor controller (33A) transmits a first control signal for closing the valve relay (811A) to the valve relay (811A). Then, the process of Step (ST12) is performed.

### <Step (ST12)>

The indoor controller (33A) transmits a second control signal for closing the alarm relay (82A) to the alarm relay (82A). Then, the process of Step (ST13) is performed.

### <Step (ST13)>

The indoor controller (33A) transmits a first signal to the outdoor controller (27).

Note that the processes of Steps (ST11 to ST13) may be performed simultaneously, or may be performed in an order different from the order illustrated in FIG. 3.

### [Operation of Valve Relay (811A) and Valve Controller (63A)]

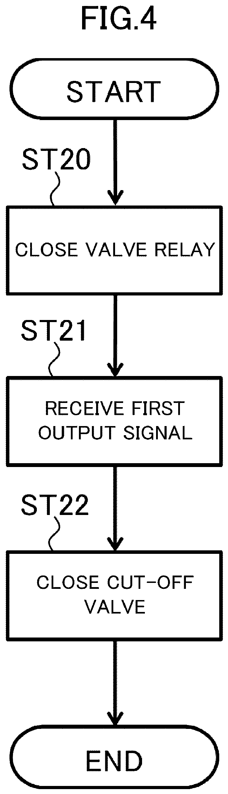

The operation of the valve relay (811A) and the valve controller (63A) will be described with reference to FIG. 4.

### <Step (ST20)>

The valve relay (811A) is closed when receiving the first control signal transmitted from the indoor controller (33A). When closed, the valve relay (811A) transmits a first output signal to the valve controller (63A) of the cut-off unit (60A).

### <Step (ST21)>

The valve controller (63A) receives the first output signal transmitted from the valve relay (811A).

### <Step (ST23)>

When receiving the first output signal, the valve controller (63A) closes the cut-off valve (VA).

### [Operation of Alarm Relay (82A) and Alarm Controller (57A)]

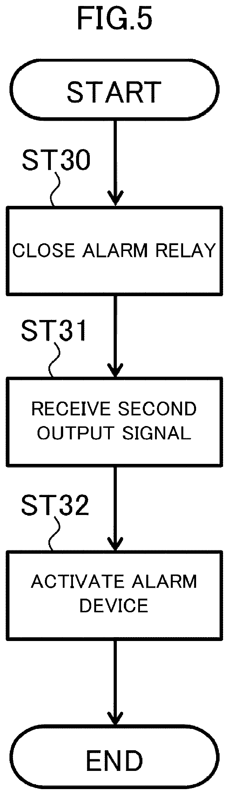

The operation of the alarm relay (82A) and the alarm controller (57A) will be described with reference to FIG. 5.

### <Step (ST30)>

The alarm relay (82A) is closed when receiving the second control signal transmitted from the indoor controller (33A). When closed, the alarm relay (82A) transmits a second output signal to the alarm controller (57A) of the alarm device (55A).

### <Step (ST31)>

The alarm controller (57A) receives the second output signal transmitted from the alarm relay (82A).

### <Step (ST32)>

The alarm controller (57A) activates the alarm (56A) when receiving the second output signal transmitted from the alarm relay (82A). This makes the alarm (56A) raise the alarm.

### [Operation of Outdoor Controller]

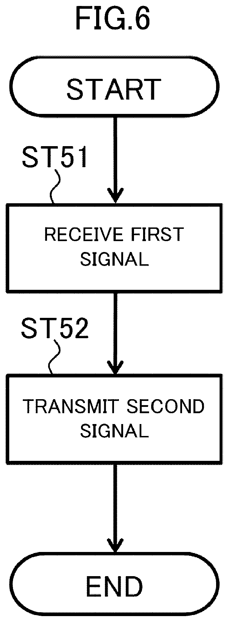

The operation of the outdoor controller (27) will be described with reference to FIG. 6.

### <Step (ST51)>

The outdoor controller (27) receives the first signal transmitted from the indoor controller (33A).

### <Step (ST52)>

When receiving the first signal, the outdoor controller (27) transmits a second signal to the indoor controller (33B).

### [Operation of Indoor Controller (33B)]

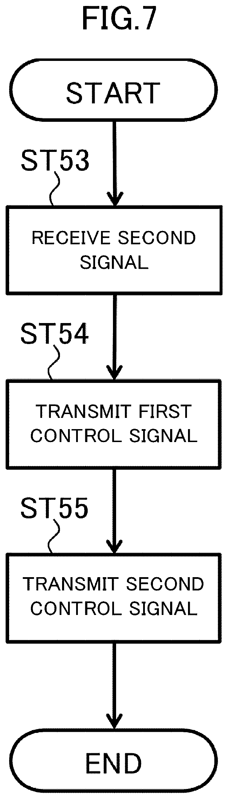

The operation of the indoor controller (33B) will be described with reference to FIG. 7.

### <Step (ST53)>

The indoor controller (33B) receives the second signal transmitted from the outdoor controller (27). When receiving the second signal, the indoor controller (33B) performs the processes of Steps (ST54, ST55).

### <Step (ST54)>

The indoor controller (33B) transmits a first control signal for closing the valve relay (811B) to the valve relay (811B). The valve relay (811B), the valve controller (63B) of the cut-off unit (60B), and the cut-off valve (VB) operate similarly to the valve relay (811A), the valve controller (63A) of the cut-off unit (60A), and the cut-off valve (VA) shown in FIG. 4.

### <Step (ST55)>

The indoor controller (33B) transmits a second control signal for closing the alarm relay (82B) to the alarm relay (82B). The alarm relay (82B) and the alarm (56B) and alarm controller (57B) of the alarm device (55B) operate similarly to the alarm relay (82A) and the alarm (56A) and alarm controller (57A) of the alarm device (55A) shown in FIG. 5.

### [Advantages of Embodiment]

In the air-conditioning system (1) of the embodiment described above, the indoor controller (33) closes the valve relay (811) when the concentration of the refrigerant detected by the detector (70) exceeds the allowable concentration. The cut-off unit (60) operates when the valve relay (811) is closed.

In the above configuration, the cut-off unit (60) is able to operate when the indoor controller (33) of the air conditioner (10) closes the valve relay (811). This can make the processing load on the indoor controller (33) of the air conditioner (10) smaller than the processing load on the indoor controller (33) that directly controls the cut-off unit (60). For example, the processing load on the indoor controller (33) can be made smaller than the processing load on the indoor controller (33) having a dedicated program for controlling the cut-off unit (60).

If the indoor controller (33) has a dedicated program for controlling the countermeasure device (the cut-off unit (60) in this example) and is configured to execute the dedicated program to directly control the countermeasure device, the dedicated program of the indoor controller (33) needs to be rewritten in response to change of the countermeasure device corresponding to the indoor controller (33).

In the air-conditioning system (1) of the embodiment, the indoor controller (33) of the air conditioner (10) has a program related to the control of the first relay (the valve relay (811) in this example). Specifically, the indoor controller (33) has a program that enables the operation of closing the first relay when the refrigerant concentration detected by the detector (70) exceeds the allowable concentration. The indoor controller (33) performs the operation by executing the program. A controller (the valve controller (63) in this example) of the countermeasure device has a dedicated program related to control of the countermeasure device. Specifically, the controller of the countermeasure device has a program that enables the operation of activating the countermeasure device when the first relay is closed. The controller of the countermeasure device performs the operation by executing the program. This configuration no longer requires the rewriting of the program of the indoor controller (33), even when the countermeasure device corresponding to the indoor controller (33) changes in the air-conditioning system (1) of the embodiment. In particular, it is unnecessary to rewrite the program related to the control of the first relay. Thus, the countermeasure device corresponding to the indoor controller (33) can be easily changed.

In the air-conditioning system (1) of the embodiment, the cut-off unit (60) includes the cut-off valve (V) provided for at least one of the liquid branch pipe (13) or the gas branch pipe (17), and closes the cut-off valve (V) when the valve relay (811) is closed.

In the above configuration, the refrigerant can be kept from leaking from the refrigerant circuit (10a) to the indoor space (A) when the cut-off valve (V) is closed. This can keep the concentration of the refrigerant in the indoor space (A) from increasing due to the leakage of the refrigerant to the indoor space (A).

The air-conditioning system (1) of the embodiment includes the valve relay (811) provided in the air conditioner (10).

In the above configuration, the valve relay (811) is provided inside the air conditioner (10). This can bring the valve relay (811) closer to the indoor controller (33) than the valve relay (811) provided outside the air conditioner (10). This can reduce misconnection between the valve relay (811) and the indoor controller (33). For example, this can reduce misconnection between the valve relay (811) and a component different from the indoor controller (33) corresponding to the valve relay (811). An example of the different component is a different indoor controller (33) that does not correspond to the valve relay (811).

In the air-conditioning system (1) of the embodiment, the indoor controller (33) closes the valve relay (811) and the alarm relay (82) when the concentration of the refrigerant detected by the detector (70) exceeds the allowable concentration. The alarm device (55) raises an alarm when the alarm relay (82) is closed.

In the above configuration, the alarm device (55) is able to operate when the indoor controller (33) of the air conditioner (10) closes the alarm relay (82). This can make the processing load on the indoor controller (33) of the air conditioner (10) smaller than the processing load on the indoor controller (33) that directly controls the alarm device (55). For example, the processing load on the indoor controller (33) can be made smaller than the processing load on the indoor controller (33) having a dedicated program for controlling the alarm device (55).

In the air-conditioning system (1) of the embodiment, the indoor controller (33) is provided in the indoor unit (30).

In the above configuration, the indoor controller (33) connected to the cut-off unit (60) via the valve relay (811) is provided in the indoor unit (30). This can bring the indoor controller (33) closer to the valve relay (811) and the cut-off unit (60) than the indoor controller (33) provided in the outdoor unit (20). This can reduce misconnection between the indoor controller (33), the valve relay (811), and the cut-off unit (60). For example, this can reduce misconnection between the valve relay (811) and a component different from the indoor controller (33) corresponding to the valve relay (811). An example of the different component is a different indoor controller (33) that does not correspond to the valve relay (811).

In the air-conditioning system (1) of the embodiment, the alarm relay (82) is provided in the air conditioner (10).

In the above configuration, the alarm relay (82) is provided inside the air conditioner (10). This can bring the alarm relay (82) closer to the indoor controller (33) than the alarm relay (82) provided outside the air conditioner (10). This can reduce misconnection between the alarm relay (82) and the indoor controller (33). For example, this can reduce misconnection between the alarm relay (82) and a component different from the indoor controller (33) corresponding to the alarm relay (82). An example of the different component is a different indoor controller (33) that does not correspond to the alarm relay (82).

In the air-conditioning system (1) of the embodiment, the indoor controller (33) transmits the first signal to the outdoor controller (27) when the concentration of the refrigerant detected by the detector (70) provided in the indoor space (A) where the indoor controller (33) is located exceeds the allowable concentration. When receiving the first signal, the outdoor controller (27) transmits the second signal to the indoor controller (33) connected to the cut-off unit (60) via the valve relay (811). For example, the outdoor controller (27) transmits the second signal to the indoor controllers (33) except for the indoor controller (33) that has transmitted the first signal. When receiving the second signal, the indoor controllers (33) close the valve relays (811).

In the above configuration, the cut-off units (60) provided in the indoor spaces (A) are able to operate when the concentration of the refrigerant detected by the detector (70) in any of the indoor spaces (A) exceeds the allowable concentration. This can handle the leakage of the refrigerant to the indoor spaces (A) even in a case of misconnection between the indoor controller (33) and the cut-off unit (60) in the air-conditioning system (1). For example, suppose one of two indoor spaces (A) is a "first indoor space (A)" and the other is a "second indoor space (A)," the indoor controller (33) and the cut-off unit (60) corresponding to the first indoor space (A) are referred to as a "first indoor controller (33)" and a "first cut-off unit (60)," and the indoor controller (33) and the cut-off unit (60) corresponding to the second indoor space (A) are referred to as a "second indoor controller (33)" and a "second cut-off unit (60)." In this case, even if the first indoor controller (33) is misconnected to the second cut-off unit (60) via the valve relay (811) and the second indoor controller (33) is misconnected to the first cut-off unit (60) via the valve relay (811), the first cut-off unit (60) and the second cut-off unit (60) are able to operate when the concentration of the refrigerant detected by the detector (70) in the first indoor space (A) and/or the second indoor space (A) exceeds the allowable concentration.

It has been described above that the outdoor controller (27) transmits the second signal to the indoor controllers (33) except for the indoor controller (33) that transmitted the first signal. However, the present invention is not limited to this example. For example, when receiving the first signal, the outdoor controller (27) may transmit the second signal to all the indoor controllers (33) connected to the cut-off unit (60) via the valve relay (811).

### (First Variation of Embodiment)

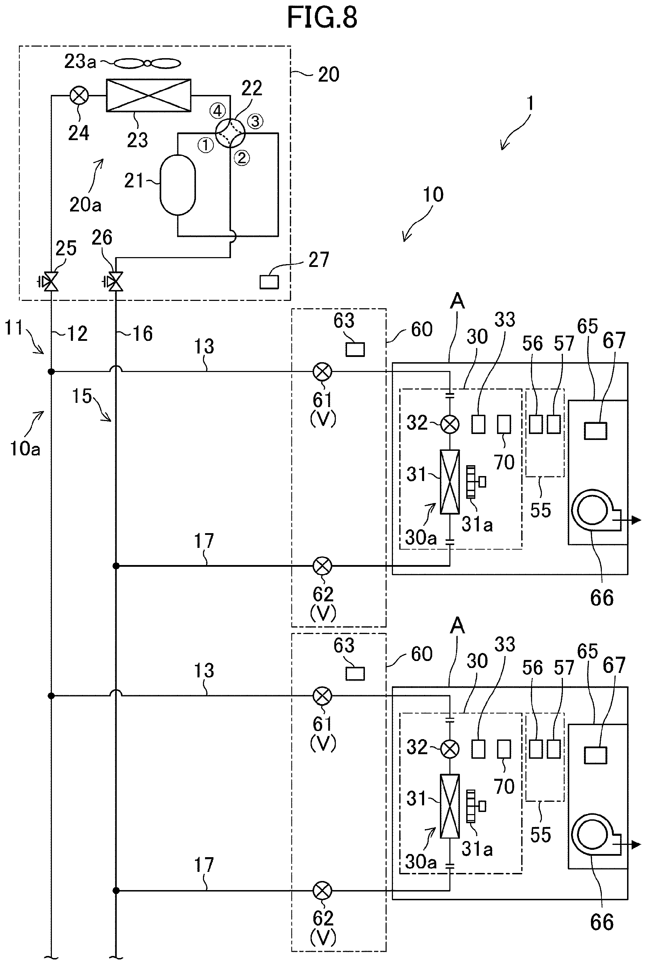

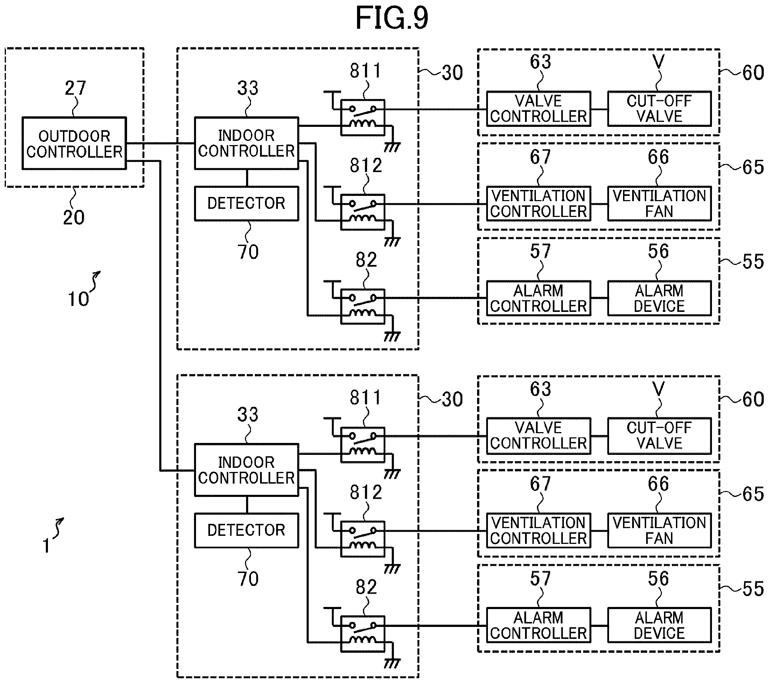

FIGS. 8 and 9 illustrate a configuration of an air-conditioning system (1) according to a first variation of the embodiment. The air-conditioning system (1) of the first variation of the embodiment includes, in addition to the components of the air-conditioning system (1) shown in FIGS. 1 and 2, a plurality of ventilators (65) and a plurality of ventilation relays (812) provided in a one-to-one correspondence with the ventilators (65). The ventilators (65) are an example of the countermeasure device. The ventilation relays (812) are an example of the first relay.

### [Ventilator]

The ventilators (65) are in a one to-one correspondence with the indoor spaces (A). The ventilators (65) have the same configuration. Each ventilator (65) includes a ventilation fan (66). The ventilation fan (66) ventilates the indoor space (A). The ventilator (65) drives the ventilation fan (66) when the ventilation relay (812) corresponding to the ventilator (65) is closed.

In this example, the ventilators (65) are arranged in the indoor spaces (A) in a one to-one correspondence. Each ventilator (65) includes the ventilation fan (66) and a ventilation controller (67).

The ventilation fan (66) is configured as, for example, a sirocco fan. The ventilation controller (67) controls the ventilation fan (66). Specifically, the ventilation controller (67) has a dedicated program for controlling the ventilation fan (66). The ventilation controller (67) executes the dedicated program to activate the ventilation fan (66). For example, the ventilation controller (67) includes a processor mounted on a control board, and a memory that stores programs and information for operating the processor.

### [Ventilation Relay]

The ventilation relays (812) have the same configuration. Each ventilation relay (812) is connected to the ventilation controller (67) of the ventilator (65) and the indoor controller (33), both corresponding to the ventilation relay (812). The ventilation relay (812) is switchable between an open state and a closed state. In this example, the ventilation relay (812) transmits a third output signal when closed.

The ventilation relay (812) is provided in the air conditioner (10). In this example, the ventilation relay (812) is provided in the indoor unit (30) including the indoor controller (33) corresponding to the ventilation relay (812). For example, the ventilation relay (812) may be provided on the control board of the indoor controller (33). Examples of the ventilation relay (812) include various relays generally used as a contact relay or a non-contact relay.

### [Operation of Air-Conditioning System at Leakage of Refrigerant]

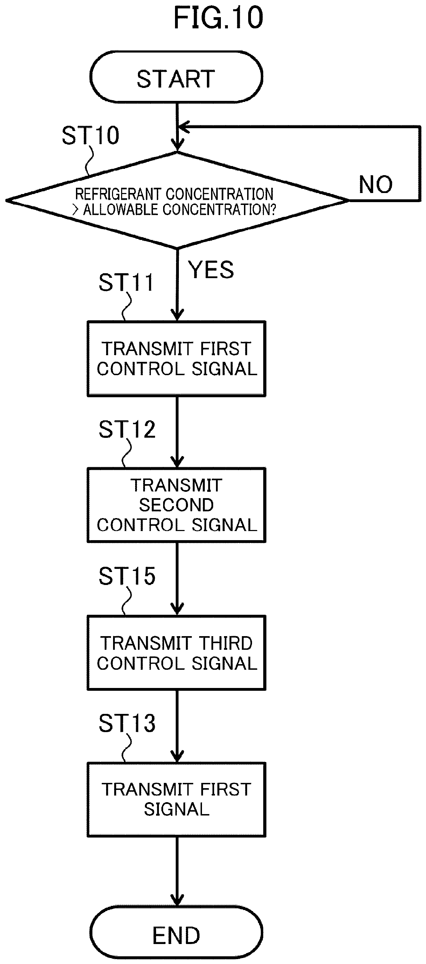

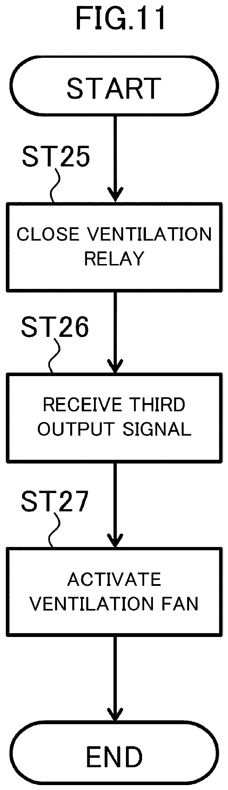

The operation of the air-conditioning system (1) of the first variation of the embodiment at the leakage of the refrigerant will be described below with reference to FIGS. 10 and 11.

In the following description, the ventilation relay (812), the ventilator (65), the ventilation fan (66), and the ventilation controller (67) corresponding to the indoor controller (33A) will be referred to as a "ventilation relay (812A)," a "ventilator (65A)," a "ventilation fan (66A)," and a "ventilation controller (67A)." The ventilation relay (812), the ventilator (65), the ventilation fan (66), and the ventilation controller (67) corresponding to the indoor controller (33B) will be referred to as a "ventilation relay (812B)," a "ventilator (65B)," a "ventilation fan (66B)," and a "ventilation controller (67B)."

### [Operation of Indoor Controller (33A)]

First, the operation of the indoor controller (33A) will be described with reference to FIG. 10. In the first variation of the embodiment, the indoor controller (33A) performs the process of Step (ST15) shown in FIG. 10 in addition to the processes of Steps (ST10 to ST13) shown in FIG. 3.

### <Step (ST15)>

The indoor controller (33A) transmits a third control signal for closing the ventilation relay (812A) to the ventilation relay (812A) when the concentration of the refrigerant detected by the detector (70) exceeds a predetermined allowable concentration.

Note that the processes of Steps (ST11 to ST13 and ST15) may be performed simultaneously, or may be performed in an order different from the order illustrated in FIG. 10.

### [Operation of Ventilation Relay (812A) and Ventilation Controller (67A)]

The operation of the valve relay (812A) and the valve controller (67A) will be described with reference to FIG. 11.

### <Step (ST25)>

The ventilation relay (812A) is closed when receiving the third control signal transmitted from the indoor controller (33A). When closed, the ventilation relay (812A) transmits a third output signal to the ventilation controller (67A) of the ventilator (65A).

### <Step (ST26)>

The ventilation controller (67A) receives the third output signal transmitted from the ventilation relay (812A).

### <Step (ST27)>

The ventilation controller (67A) activates the ventilation fan (66A) when receiving the third output signal.

### [Operation of Indoor Controller (33B)]

In the first variation of the embodiment, when receiving the second signal transmitted from the outdoor controller (27), the indoor controller (33B) transmits the first control signal to the valve relay (811B), the second control signal to the alarm relay (82B), and the third control signal to the ventilation relay (812B). The ventilation relay (812B) and the ventilation fan (66B) and ventilation controller (67B) of the ventilator (65B) operate similarly to the ventilation relay (812A) and the ventilation fan (66A) and ventilation controller (67A) of the ventilator (65A) shown in FIG. 11.

### [Advantages of First Variation of Embodiment]

As described above, in the air-conditioning system (1) of the first variation of the embodiment, the ventilator (65) includes the ventilation fan (66) that ventilates the indoor space (A), and drives the ventilation fan (66) when the ventilation relay (812) is closed.

In the above configuration, the refrigerant leaked to the indoor space (A) can be discharged out of the indoor (A) when the ventilation fan (66) is driven. This can keep the concentration of the refrigerant in the indoor space (A) from increasing due to the leakage of the refrigerant to the indoor space (A).

### (Second Variation of Embodiment)

An air-conditioning system (1) of a second variation of the embodiment differs from the air-conditioning system (1) of the embodiment shown in FIGS. 1 and 2 in the correspondence between the indoor spaces (A) and the cut-off units (60) and the operation of the indoor controllers (33). The air-conditioning system (1) of the second variation of the embodiment is configured similarly to the air-conditioning system (1) shown in FIGS. 1 and 2 except for the above differences. The indoor units (30) are arranged in the indoor spaces (A) in a one to-one correspondence. The indoor units (30) are each provided with an indoor controller (33). The detector (70) is provided in each of the indoor spaces (A).

### [Correspondence Between Indoor Space and Cut-Off Unit]

The air-conditioning system (1) shown in FIGS. 1 and 2 includes the cut-off unit (60) provided for each of the indoor spaces (A). However, in the air-conditioning system (1) of the second variation of the embodiment, some indoor spaces (A) are in correspondence with the cut-off units (60), and others are not. The cut-off unit (60) corresponds to at least one of the indoor spaces (A). The valve relay (811) is provided for each of the cut-off units (60).

### [Indoor Controller]

In the second variation of the embodiment, the indoor controller (33) switches the operation depending on whether the cut-off unit (60) is provided in correspondence with the indoor controller (33). Specifically, the indoor controller (33) performs a first operation when the cut-off unit (60) is provided in correspondence with the indoor controller (33), and performs a second operation when no cut-off unit (60) is provided in correspondence with the indoor controller (33). In the first operation, the indoor controller (33) closes the valve relay (811) corresponding to the indoor controller (33) and transmits a first signal to the outdoor controller (27) when the concentration of the refrigerant detected by the detector (70) corresponding to the indoor controller (33) exceeds the allowable concentration. In the second operation, the indoor controller (33) transmits the first signal to the outdoor controller (27) when the concentration of the refrigerant detected by the detector (70) corresponding to the indoor controller (33) exceeds the allowable concentration.

Note that "the cut-off unit (60) provided in correspondence with the indoor controller (33)" is the cut-off unit (60) for the indoor space (A) corresponding to the indoor unit (30) including the indoor controller (33). In other words, the cut-off unit (60) provided in correspondence with the indoor controller (33) is the cut-off unit (60) connected to the indoor controller (33) via the valve relay (811). The "detector (70) corresponding to the indoor controller (33)" refers to the detector (70) provided in the indoor space (A) corresponding to the indoor unit (30) including the indoor controller (33). In other words, the detector (70) corresponding to the indoor controller (33) is the detector (70) provided in the indoor space (A) where the indoor controller (33) is located.

In the second variation of the embodiment, each of the indoor controllers (33) transmits the first signal to the outdoor controller (27) when the concentration of the refrigerant detected by the detector (70) provided in the indoor space (A) where the indoor controller (33) is located exceeds the allowable concentration. When receiving the first signal transmitted from any of the indoor controllers (33), the outdoor controller (27) transmits the second signal to the indoor controller (33) in correspondence with the cut-off unit (60) among the plurality of indoor controllers (33) (in other words, the indoor controller (33) having the corresponding cut-off unit (60)). When receiving the second signal transmitted from the outdoor controller (27), the indoor controller (33) having the corresponding cut-off unit (60) closes the valve relay (811) corresponding to the indoor controller (33).

### [Operation of Indoor Controller at Leakage of Refrigerant in Air Conditioning System]

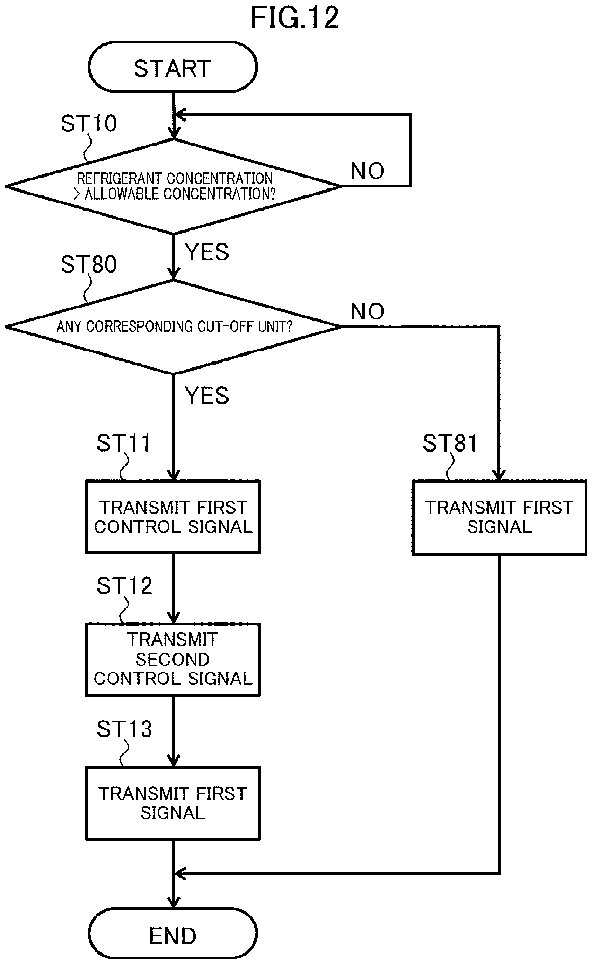

The operation of the indoor controller (33A) of the air-conditioning system (1) of the second variation of the embodiment at the leakage of the refrigerant will be described below with reference to FIG. 12. Steps (ST11 to ST13) correspond to the first operation, and Step (ST81) corresponds to the second operation.

### <Step (ST10)>

First, the process of Step (ST10) is performed. The indoor controller (33A) determines whether the concentration of the refrigerant detected by the detector (70) exceeds the allowable concentration. If the concentration of the refrigerant detected by the detector (70) exceeds the allowable concentration, the process of Step (ST80) is performed.

### <Step (ST80)>

The indoor controller (33A) determines whether the cut-off unit (60A) is in correspondence with the indoor controller (33A). Specifically, the indoor controller (33A) stores in advance information about whether the cut-off unit (60A) is provided in correspondence with the indoor controller (33A), and determines whether the corresponding cut-off unit (60A) is present based on the information.

For example, whether the corresponding cut-off unit (60) is present may be determined based on whether communication is established between the indoor controller (33) and the valve controller (63) of the cut-off unit (60). Specifically, when communication is established between the indoor controller (33) and the valve controller (63), the indoor controller (33) stores information indicating that the cut-off unit (60) corresponds to the indoor controller (33). When no communication is established between the indoor controller (33) and the valve controller (63), the indoor controller (33) stores information indicating that no cut-off unit (60) corresponds to the indoor controller (33).

The processes of Steps (ST11 to ST13) are performed if the cut-off unit (60A) corresponds to the indoor controller (33A), and the process of Step (ST81) is performed if not.

### <Steps (ST11 to ST13)>

When the cut-off unit (60A) corresponds to the indoor controller (33A), the indoor controller (33A) transmits a first control signal to the valve relay (811A), a second control signal to the alarm relay (82A), and a first signal to the outdoor controller (27).

### <Step (ST81)>

When no cut-off unit (60A) corresponds to the indoor controller (33A), the indoor controller (33A) transmits the first signal to the outdoor controller (27).

### [Operation of Outdoor Controller at Leakage of Refrigerant in Air-Conditioning System]

If some indoor spaces (A) are in correspondence with the cut-off units (60) and others are not as described in the second variation of the embodiment, the outdoor controller (27) may be configured to transmit the second signal to the indoor controllers (33B) for the indoor spaces (A) in correspondence with the cut-off units (60).

### [Advantages of Second Variation of First Embodiment]

As described above, the air-conditioning system (1) of the second variation of the embodiment includes the detector (70) provided in each of the indoor spaces (A). The indoor controller (33) transmits the first signal to the outdoor controller (27) when the concentration of the refrigerant detected by the detector (70) provided in the indoor space (A) where the indoor controller (33) is located exceeds the allowable concentration. When receiving the first signal, the outdoor controller (27) transmits the second signal to the indoor controller (33) connected to the cut-off unit (60) via the valve relay (811). When receiving the second signal, the indoor controllers (33) close the valve relays (811).

In the above configuration, the cut-off units (60) provided in the indoor spaces (A) are able to operate when the concentration of the refrigerant detected by the detector (70) in any of the indoor spaces (A) exceeds the allowable concentration. This can handle the leakage of the refrigerant to the indoor spaces (A) even in a case of misconnection between the indoor controller (33) and the cut-off unit (60) in the air-conditioning system (1).

In the air-conditioning system (1) of the second variation of the embodiment, the indoor controller (33) closes the valve relay (811) and transmits the first signal to the outdoor controller (27) when the concentration of the refrigerant detected by the detector (70) provided in the indoor space (A) where the indoor controller (33) is located exceeds the allowable concentration and the cut-off unit (60) is connected to the indoor controller (33) via the valve relay (811). The indoor controller (33) transmits the first signal to the outdoor controller (27) when the concentration of the refrigerant detected by the detector (70) provided in the indoor space (A) where the indoor controller (33) is located exceeds the allowable concentration and no cut-off unit (60) is connected to the indoor controller (33) via the valve relay (811).

In the above configuration, the cut-off unit (60) connected to the indoor controller (33) via the valve relay (811) is able to operate when the concentration of the refrigerant detected by the detector (70) in any of the indoor spaces (A) exceeds the allowable concentration. This can handle the leakage of the refrigerant to the indoor spaces (A).

The air-conditioning system (1) of the second variation of the embodiment may include a ventilator (65) instead of the cut-off unit (60), or may include both of the ventilator (65) and the cut-off unit (60). The air-conditioning system (1) of the second variation of the embodiment may include a ventilation relay (811) instead of the valve relay (811), or may include both of the ventilation relay (812) and the valve relay (812).

### (Refrigerant)

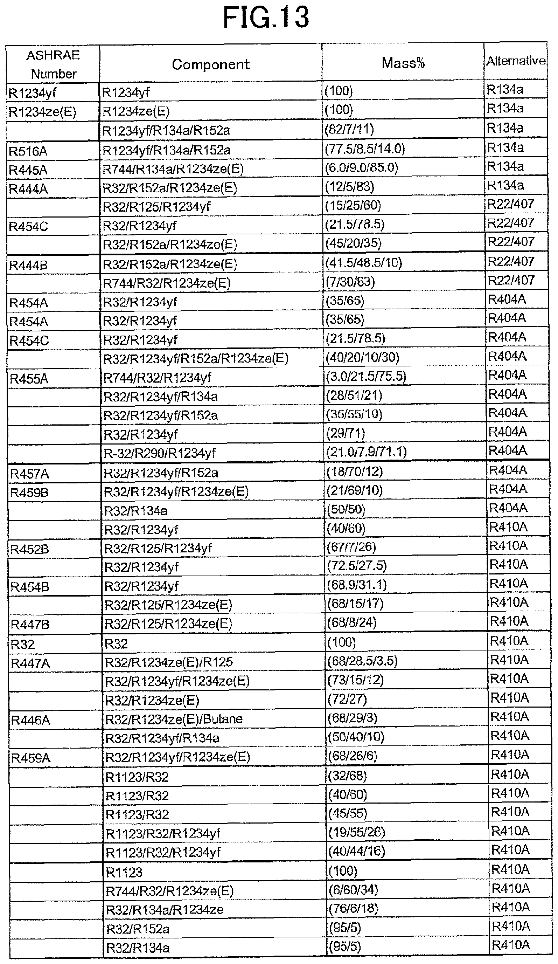

The refrigerants used in the refrigerant circuit (10a) of the air conditioner (10) of the above-described embodiments and variations are flammable refrigerants. The flammable refrigerant includes refrigerants of Class 3 (highly flammable), Class 2 (less flammable), and Subclass 2L (mildly flammable) under the U.S. Standard ASHRAE34, Designation and Safety Classification of Refrigerants, or ISO817, Refrigerant-Designation and Safety Classification. FIG. 13 shows specific examples of the refrigerants used in the embodiments and the variations described above. In FIG. 13, "ASHRAE Number" indicates the ASHRAE number of each refrigerant defined in ISO 817, "Component" indicates the ASHRAE number of each substance contained in the refrigerant, "Mass%" indicates the concentration of each substance contained in the refrigerant by mass%, and "Alternative" indicates the name of an alternative to the substance of the refrigerant which is often replaced by the alternative. The refrigerant used in the embodiments is R32. The examples of the refrigerants shown in FIG. 13 are characterized by having a higher density than the air.

### (Other Embodiments)

The valve relay (811) described above may be provided in the cut-off unit (60). For example, the valve relay (811) may be provided on the control board of the valve controller (63) of the cut-off unit (60). Likewise, the ventilation relay (812) may be provided in the ventilator (65). For example, the ventilation relay (812) may be provided on the control board of the ventilation controller (67) of the ventilator (65).

When the valve relay (811) is provided inside the cut-off unit (60) as described above, the valve relay (811) can be brought closer to the valve controller (63) of the cut-off unit (60) than the valve relay (811) provided outside the cut-off unit (60). This can reduce misconnection between the valve relay (811) and the valve controller (63) of the cut-off unit (60). The same applies to the ventilation relay (812).

In the above description, the alarm relay (82) may be provided in the alarm device (55). For example, the alarm relay (82) may be provided on the control board of the alarm controller (57) of the alarm device (55).

The indoor unit (30) described above may be of any type, and may be an indoor unit mounted on the ceiling or the wall, or placed on the floor.

In the above description, the measurement unit of the detector (70) detects the concentration of the refrigerant in the indoor space (A), and the indoor controller (33) determines whether the refrigerant concentration measured by the measurement unit of the detector (70) exceeds the predetermined allowable concentration. However, the present invention is not limited to this example. For example, the detector (70) may include the measurement unit and a calculation unit. The calculation unit determines whether the refrigerant concentration measured by the measurement unit exceeds the allowable concentration, and outputs a determination result signal indicating the determination result to the indoor controller (33). For example, the calculation unit includes a processor and a memory that stores programs and information for operating the processor. The indoor controller (33) may determine whether the refrigerant concentration measured by the measurement unit of the detector (70) exceeds the allowable concentration based on the determination result signal outputted from the calculation unit of the detector (70).

In the above description, one indoor unit (30) is provided in one indoor space (A). However, a plurality of indoor units (30) may be provided in one indoor space (A). Likewise, one detector (70) or a plurality of detectors (70) may be provided in one indoor space (A). The same applies to the cut-off unit (60) and the alarm device (55).

In the above description, the air-conditioning system (1) includes a plurality of cut-off units (60) and a plurality of valve relays (811). However, the present invention is not limited to this example. For example, the air-conditioning system (1) may include a single cut-off unit (60) and a single valve relay (811), or may include a single ventilator (65) and a single ventilation relay (812). Likewise, the air-conditioning system (1) may include a single alarm device (55) and a single alarm relay (82).

In the above description, the air-conditioning system (1) includes the alarm device (55) and the alarm relay (82). However, the air-conditioning system (1) may not include the alarm device (55) and the alarm relay (82).

In the first variation of the embodiment described above, the air-conditioning system (1) includes both of the cut-off unit (60) and the ventilator (65). However, the present invention is not limited to this example. For example, the air-conditioning system (1) may have no cut-off unit (60), and include one or more ventilators (65).

While the embodiments and variations thereof have been described above, it will be understood that various changes in form and details may be made without departing from the scope of the claims.

### INDUSTRIAL APPLICABILITY

As can be seen in the foregoing, the present invention is useful as an air-conditioning system.

### DESCRIPTION OF REFERENCE CHARACTERS

- 1: Air-Conditioning System
- 10: Air Conditioner
- 10a: Refrigerant Circuit
- 13: Liquid Branch Pipe (First Refrigerant Flow Path)
- 17: Gas Branch Pipe (Second Refrigerant Flow Path)
- 20: Outdoor Unit
- 27: Outdoor Controller
- 30: Indoor Unit
- 33: Indoor Controller
- 55: Alarm Device
- 60: Cut-Off Unit (Countermeasure Device)
- 61: First Cut-Off Valve
- 62: Second Cut-Off Valve
- 63: Valve Controller
- 65: Ventilator (Countermeasure Device)
- 66: Ventilation Fan
- 67: Ventilation Controller
- 70: Detector
- 811: Valve Relay (First Relay)
- 812: Ventilation relay (First Relay)
- 82: Second Relay
- V: Cut-Off Valve

## Claims

1. An air-conditioning system, comprising:
an air conditioner (10) having a refrigerant circuit (10a) in which a refrigerant circulates and a controller (33) and being configured to condition air in an indoor space (A);
a countermeasure device (60, 65) provided against leakage of the refrigerant to the indoor space (A);
a detector (70) configured to detect a concentration of the refrigerant in the indoor space (A); and
a first relay (811, 812) connected to the controller (33) and the countermeasure device (60, 65),
the controller (33) of the air conditioner (10) having a program that enables the operation of closing the first relay (811, 812) when the concentration of the refrigerant detected by the detector (70) exceeds the predetermined allowable concentration, and
**characterized in that** the countermeasure device (60, 65) having a controller (63, 67), said controller (63, 67) of the countermeasure device (60, 65) having a dedicated program that enables the operation of activating the countermeasure device (60, 65) when the first relay (811, 812) is closed.

2. The air-conditioning system of claim 1, wherein
the refrigerant circuit (10a) has an indoor circuit (30a) including an indoor heat exchanger (31) provided in the indoor space (A), a first refrigerant flow path (13) connected to a gas end portion of the indoor circuit (30a), and a second refrigerant flow path (17) connected to a liquid end portion of the indoor circuit (30a), and
the countermeasure device (60, 65) includes a cut-off valve (V) provided in at least one of the first refrigerant flow path (13) or the second refrigerant flow path (17), and closes the cut-off valve (V) when the first relay (811, 812) is closed.

3. The air-conditioning system of claim 1 or 2, wherein
the countermeasure device (60, 65) includes a ventilation fan (66) that ventilates the indoor space (A), and drives the ventilation fan (66) when the first relay (811, 812) is closed.

4. The air-conditioning system of any one of claims 1 to 3, wherein
the first relay (811, 812) is provided in the air conditioner (10).

5. The air-conditioning system of any one of claims 1 to 3, wherein
the first relay (811, 812) is provided in the countermeasure device (60, 65).

6. The air-conditioning system of any one of claims 1 to 5, further comprising:
an alarm device (55) configured to raise an alarm; and
a second relay (82) connected to the controller (33) and the alarm device (55), wherein
the controller (33) closes the first relay (811, 812) and the second relay (82) when the concentration of the refrigerant detected by the detector (70) exceeds the allowable concentration, and
the alarm device (55) raises the alarm when the second relay (82) is closed.

7. The air-conditioning system of any one of claims 1 to 6, wherein
the air conditioner (10) includes an outdoor unit (20) and an indoor unit (30), and
the controller (33) is provided in the indoor unit (30).

8. The air-conditioning system of any one of claims 1 to 6, wherein
the air conditioner (10) includes an outdoor unit (20) and a plurality of indoor units (30) configured to condition air in a plurality of indoor spaces (A),
the outdoor unit (20) includes an outdoor controller (27),
the controller (33) is provided in each of the plurality of indoor units (30), and
the countermeasure device (60, 65) is provided in correspondence with at least one of the plurality of indoor spaces (A),
the detector (70) is provided in each of the plurality of indoor spaces (A),
the controller (33) transmits a first signal to the outdoor controller (27) when the concentration of the refrigerant detected by the detector (70) provided in the indoor space (A) where the indoor controller (33) is located exceeds the allowable concentration, and
the outdoor controller (27) transmits a second signal to the controller (33) connected to the countermeasure device (60, 65) via the first relay (811, 812) when receiving the first signal, and
the controller (33) closes the first relay (811, 812) when receiving the second signal.

9. The air-conditioning system of claim 8, wherein
the controller (33)
closes the first relay (811, 812) and transmits the first signal to the outdoor controller (27) when the concentration of the refrigerant detected by the detector (70) provided in the indoor space (A) where the indoor controller (33) is located exceeds the allowable concentration and the countermeasure device (60, 65) is connected to the controller (33) via the first relay (811, 812), and
transmits the first signal to the outdoor controller (27) when the concentration of the refrigerant detected by the detector (70) provided in the indoor space (A) where the indoor controller (33) is located exceeds the allowable concentration and the countermeasure device (60, 65) is not connected to the controller (33) via the first relay (811, 812).

## Patentansprüche

1. Klimatisierungssystem, umfassend:
eine Klimaanlage (10), die einen Kältemittelkreislauf (10a), in dem ein Kältemittel zirkuliert, und eine Steuereinheit (33) aufweist und die so konfiguriert ist, dass sie Luft in einem Innenraum (A) klimatisiert;
eine Gegenmaßnahmevorrichtung (60, 65), die gegen ein Austreten des Kältemittels in den Innenraum (A) bereitgestellt ist;
einen Detektor (70), der so konfiguriert ist, dass er eine Konzentration des Kältemittels in dem Innenraum (A) detektiert; und
ein erstes Relais (811, 812), das mit der Steuereinheit (33) und der Gegenmaßnahmevorrichtung (60, 65) verbunden ist,
wobei die Steuereinheit (33) der Klimaanlage (10) ein Programm aufweist, das den Betrieb des Schließens des ersten Relais (811, 812) ermöglicht, wenn die Konzentration des Kältemittels, die von dem Detektor (70) detektiert wird, die vorbestimmte zulässige Konzentration überschreitet, und
**dadurch gekennzeichnet, dass** die Gegenmaßnahmevorrichtung (60, 65) eine Steuereinheit (63, 67) aufweist, wobei die Steuereinheit (63, 67) der Gegenmaßnahmevorrichtung (60, 65) ein spezielles Programm aufweist, das den Betrieb des Aktivierens der Gegenmaßnahmevorrichtung (60, 65) ermöglicht, wenn das erste Relais (811, 812) geschlossen ist.

2. Klimatisierungssystem nach Anspruch 1, wobei
der Kältemittelkreislauf (10a) einen Innenkreislauf (30a) aufweist, der einen Innenwärmetauscher (31), der in dem Innenraum (A) bereitgestellt ist, einen ersten Kältemittelströmungsweg (13), der mit einem Gasendabschnitt des Innenkreislaufs (30a) verbunden ist, und einen zweiten Kältemittelströmungsweg (17), der mit einem Flüssigkeitsendabschnitt des Innenkreislaufs (30a) verbunden ist, einschließt, und
die Gegenmaßnahmevorrichtung (60, 65) ein Absperrventil (V) einschließt, das in mindestens einem von dem ersten Kältemittelströmungsweg (13) oder dem zweiten Kältemittelströmungsweg (17) bereitgestellt ist, und das das Absperrventil (V) schließt, wenn das erste Relais (811, 812) geschlossen ist.

3. Klimatisierungssystem nach Anspruch 1 oder 2, wobei
die Gegenmaßnahmevorrichtung (60, 65) ein Lüftungsgebläse (66) einschließt, das den Innenraum (A) belüftet, und das Lüftungsgebläse (66) antreibt, wenn das erste Relais (811, 812) geschlossen ist.

4. Klimatisierungssystem nach einem der Ansprüche 1 bis 3, wobei
das erste Relais (811, 812) in der Klimaanlage (10) bereitgestellt ist.

5. Klimatisierungssystem nach einem der Ansprüche 1 bis 3, wobei
das erste Relais (811, 812) in der Gegenmaßnahmevorrichtung (60, 65) bereitgestellt ist.

6. Klimatisierungssystem nach einem der Ansprüche 1 bis 5, weiter umfassend:
eine Alarmvorrichtung (55), die so konfiguriert ist, dass sie einen Alarm auslöst; und
ein zweites Relais (82), das mit der Steuereinheit (33) und der Alarmvorrichtung (55) verbunden ist, wobei
die Steuereinheit (33) das erste Relais (811, 812) und das zweite Relais (82) schließt, wenn die von dem Detektor (70) detektierte Konzentration des Kältemittels die zulässige Konzentration überschreitet, und
die Alarmvorrichtung (55) den Alarm auslöst, wenn das zweite Relais (82) geschlossen ist.

7. Klimatisierungssystem nach einem der Ansprüche 1 bis 6, wobei
die Klimaanlage (10) eine Außeneinheit (20) und eine Inneneinheit (30) einschließt und
die Steuereinheit (33) in der Inneneinheit (30) bereitgestellt ist.

8. Klimatisierungssystem nach einem der Ansprüche 1 bis 6, wobei
die Klimaanlage (10) eine Außeneinheit (20) und eine Vielzahl von Inneneinheiten (30) einschließt, die so konfiguriert sind, dass sie Luft in einer Vielzahl von Innenräumen (A) klimatisieren,
die Außeneinheit (20) eine Außensteuereinheit (27) einschließt,
die Steuereinheit (33) in jeder der Vielzahl von Inneneinheiten (30) bereitgestellt ist, und
die Gegenmaßnahmevorrichtung (60, 65) in Übereinstimmung mit mindestens einem der Vielzahl von Innenräumen (A) bereitgestellt ist,
der Detektor (70) in jedem der Vielzahl von Innenräumen (A) bereitgestellt ist,
die Steuereinheit (33) ein erstes Signal an die Außensteuereinheit (27) sendet, wenn die Konzentration des Kältemittels, die von dem in dem Innenraum (A), in dem sich die Innensteuereinheit (33) befindet, bereitgestellten Detektor (70) detektiert wird, die zulässige Konzentration überschreitet, und
die Außensteuereinheit (27) beim Empfang des ersten Signals über das erste Relais (811, 812) ein zweites Signal an die mit der Gegenmaßnahmevorrichtung (60, 65) verbundene Steuereinheit (33) sendet, und
die Steuereinheit (33) beim Empfang des zweiten Signals das erste Relais (811, 812) schließt.

9. Klimatisierungssystem nach Anspruch 8, wobei
die Steuereinheit (33)
das erste Relais (811, 812) schließt und das erste Signal an die Außensteuereinheit (27) sendet, wenn die Konzentration des Kältemittels, die von dem Detektor (70) detektiert wird, der in dem Innenraum (A) bereitgestellt ist, in dem sich die Innensteuereinheit (33) befindet, die zulässige Konzentration überschreitet und die Gegenmaßnahmevorrichtung (60, 65) über das erste Relais (811, 812) mit der Steuereinheit (33) verbunden ist, und
das erste Signal an die Außensteuereinheit (27) sendet, wenn die Konzentration des Kältemittels, die von dem Detektor (70) detektiert wird, der in dem Innenraum (A) bereitgestellt ist, in dem sich die Innensteuereinheit (33) befindet, die zulässige Konzentration überschreitet, und die Gegenmaßnahmevorrichtung (60, 65) nicht über das erste Relais (811, 812) mit der Steuereinheit (33) verbunden ist.

## Revendications

1. Système de climatisation, comprenant :
un climatiseur (10) présentant un circuit de fluide frigorigène (10a) dans lequel un fluide frigorigène circule et un dispositif de commande (33) et configuré pour climatiser l'air dans un espace intérieur (A) ;
un dispositif de contre-mesure (60, 65) prévu contre une fuite du fluide frigorigène dans l'espace intérieur (A) ;
un détecteur (70) configuré pour détecter une concentration du fluide frigorigène dans l'espace intérieur (A) ; et
un premier relais (811, 812) connecté au dispositif de commande (33) et au dispositif de contre-mesure (60, 65),
le dispositif de commande (33) du climatiseur (10) présentant un programme qui permet l'opération de fermeture du premier relais (811, 812) lorsque la concentration du fluide frigorigène détectée par le détecteur (70) dépasse la concentration permise prédéterminée, et
**caractérisé en ce que** le dispositif de contre-mesure (60, 65) présente un dispositif de commande (63, 67), ledit dispositif de commande (63, 67) du dispositif de contre-mesure (60, 65) présentant un programme dédié qui permet l'opération d'activation du dispositif de contre-mesure (60, 65) lorsque le premier relais (811, 812) est fermé.

2. Système de climatisation selon la revendication 1, dans lequel
le circuit de fluide frigorigène (10a) présente un circuit intérieur (30a) incluant un échangeur de chaleur intérieur (31) prévu dans l'espace intérieur (A), un premier trajet d'écoulement de fluide frigorigène (13) connecté à une partie d'extrémité de gaz du circuit intérieur (30a), et un deuxième trajet d'écoulement de fluide frigorigène (17) connecté à une partie d'extrémité de liquide du circuit intérieur (30a), et
le dispositif de contre-mesure (60, 65) inclut une vanne d'arrêt (V) prévue dans au moins l'un du premier trajet d'écoulement de fluide frigorigène (13) ou du deuxième trajet d'écoulement de fluide frigorigène (17), et ferme la vanne d'arrêt (V) lorsque le premier relais (811, 812) est fermé.

3. Système de climatisation selon la revendication 1 ou la revendication 2, dans lequel
le dispositif de contre-mesure (60, 65) inclut un ventilateur (66) qui ventile l'espace intérieur (A), et entraîne le ventilateur (66) lorsque le premier relais (811, 812) est fermé.

4. Système de climatisation selon l'une quelconque des revendications 1 à 3, dans lequel
le premier relais (811, 812) est prévu dans le climatiseur (10).

5. Système de climatisation selon l'une quelconque des revendications 1 à 3, dans lequel
le premier relais (811, 812) est prévu dans le dispositif de contre-mesure (60, 65).

6. Système de climatisation selon l'une quelconque des revendications 1 à 5, comprenant en outre :
un dispositif d'alarme (55) configuré pour déclencher une alarme ; et
un deuxième relais (82) connecté au dispositif de commande (33) et au dispositif d'alarme (55), dans lequel
le dispositif de commande (33) ferme le premier relais (811, 812) et le deuxième relais (82) lorsque la concentration du fluide frigorigène détectée par le détecteur (70) dépasse la concentration permise, et
le dispositif d'alarme (55) déclenche l'alarme lorsque le deuxième relais (82) est fermé.

7. Système de climatisation selon l'une quelconque des revendications 1 à 6, dans lequel
le climatiseur (10) inclut une unité extérieure (20) et une unité intérieure (30), et
le dispositif de commande (33) est prévu dans l'unité intérieure (30).

8. Système de climatisation selon l'une quelconque des revendications 1 à 6, dans lequel
le climatiseur (10) inclut une unité extérieure (20) et une pluralité d'unités intérieures (30) configurées pour climatiser l'air dans une pluralité d'espaces intérieurs (A),
l'unité extérieure (20) inclut un dispositif de commande extérieur (27),
le dispositif de commande (33) est prévu dans chacune de la pluralité d'unités intérieures (30), et
le dispositif de contre-mesure (60, 65) est prévu en correspondance avec au moins l'un de la pluralité d'espaces intérieurs (A),
le détecteur (70) est prévu dans chacun de la pluralité d'espaces intérieurs (A),
le dispositif de commande (33) transmet un premier signal au dispositif de commande extérieur (27) lorsque la concentration du fluide frigorigène détectée par le détecteur (70) prévu dans l'espace intérieur (A) où le dispositif de commande (33) intérieur est situé dépasse la concentration permise, et
le dispositif de commande extérieur (27) transmet un deuxième signal au dispositif de commande (33) connecté au dispositif de contre-mesure (60, 65) par l'intermédiaire du premier relais (811, 812) lors de la réception du premier signal, et
le dispositif de commande (33) ferme le premier relais (811, 812) lorsqu'il reçoit le deuxième signal.

9. Système de climatisation selon la revendication 8, dans lequel
le dispositif de commande (33)
ferme le premier relais (811, 812) et transmet le premier signal au dispositif de commande extérieur (27) lorsque la concentration du fluide frigorigène détectée par le détecteur (70) prévu dans l'espace intérieur (A) où le dispositif de commande (33) intérieur est situé dépasse la concentration permise et que le dispositif de contre-mesure (60, 65) est connecté au dispositif de commande (33) par l'intermédiaire du premier relais (811, 812), et
transmet le premier signal au dispositif de commande extérieur (27) lorsque la concentration du fluide frigorigène détectée par le détecteur (70) prévu dans l'espace intérieur (A) où le dispositif de commande (33) intérieur est situé dépasse la concentration permise et que le dispositif de contre-mesure (60, 65) n'est pas connecté au dispositif de commande (33) par l'intermédiaire du premier relais (811, 812).
